# EUROPEAN PATENT APPLICATION

(11) **EP 4 147 617 A1**
(43) Date of publication of application: **15.03.2023**
(21) Application number: 22151679.2
(22) Date of filing: 14.01.2022
(51) Int. Cl.: A47J 37/07

(54) **PELLET COOKER**

(30) Priority: 08.09.2021 US 202163241996 P
(71) Applicant: Onward Multi-Corp Inc., Waterloo, ON N2V 1K3 (CA)
(72) Inventor: Witzel, Theodore Andrew, Ontario, N2V 1K3 (CA); Bowser, Orrin, Ontario, N2V 1K3 (CA); Wei, Evan, Ontario, N2V 1K3 (CA)
(74) Representative: Brand Murray Fuller LLP

(57) **Abstract**

A cooking apparatus (100, 100', 1100), including a body (110, 1110) defining an interior cooking chamber (112, 112', 1112) and a combustion chamber (160, 160', 1160) coupled to the body (110, 1110). The combustion chamber (160, 160', 1160) is arranged to heat the cooking chamber (112, 112', 1112), and includes a fuel supply port (226, 226', 1226) and an air supply port (228, 228', 1228) separate from the fuel supply port (226, 226', 1226). A fuel supply assembly (180, 180', 1180) is coupled to the body (110, 1110), and includes a fuel supply reservoir (230, 230', 1230) arranged to provide fuel to the fuel supply port (226, 226', 1226). An air supply assembly (162, 162', 1162) is coupled to the body (110, 1110), and includes an air moving member (236, 236', 1236) arranged to move air towards the air supply port (228, 228', 1228). A baffle (220, 220', 1220) is within the combustion chamber (160, 160', 1160) separating a combustion zone (222, 222', 1222) from the air supply port (228, 228', 1228).

## Description

### FIELD

The specification relates generally to cooking, and more specifically to pellet cookers.

### BACKGROUND

United States Patent No. 10,912,413 to Walters et al. ("Walters") purports to disclose a grill including an upper shell and a lower shell. Walters purports to disclose that the lower shell defines an opening there-through, and the upper shell and the lower shell together define a cooking chamber. Walters purports to disclose that a pellet burner is adapted to fit in the opening in the lower shell, and the pellet burner includes an air duct having a first end and a second end. Walters purports to disclose that the first end is positioned outside of the lower shell and the second end is positioned inside of the lower shell when the pellet burner is fitted in the opening in the lower shell. Walters purports to disclose that the pellet burner includes a fan positioned to blow air through the air duct and through the second end of the air duct, and a pellet box configured to hold a plurality of pellets. Walters further purports to disclose that an auger moves the pellets to a position adjacent the second end of the air duct that contains a hot rod.

International Patent App. Pub. No. WO 2013/116946 to Harper ("Harper") purports to disclose a cooker that includes a cooking chamber having a high heat capacity and a heating assembly that generates heat energy by combusting pellets. Harper purports to disclose that the cooking chamber and the heating assembly are connected such that the heat energy generated by the heating assembly transfers from the heating assembly to the cooking chamber. Harper further purports to disclose that the heating assembly may be outside the cooking chamber.

United States Patent App. Pub. No. 2020/0046163 to Yang et al. ("Yang") purports to disclose a pellet grill that includes a ceramic oven body and a ceramic inner liner, and the oven body includes a first through-hole in its side. Yang purports to disclose that a conduit is inserted through the first through-hole into the oven body, and a firepot is removably coupled to the conduit toward an end of the conduit that is within the oven body. Yang purports to disclose that the inner liner conforms to a shape of, and fits to a portion of, an oven body inner wall, and the inner liner covers the conduit and includes a second through-hole aligned with the firepot. Yang purports to disclose that a bulge in the inner liner conforms to a shape of the conduit within the ceramic oven body and may protect the conduit from cooking debris and from heat, rising from a flame in the firepot, that circulates within a portion of the oven body that is above the inner liner. Yang further purports to disclose that the firepot receives fuel and air via the conduit.

### SUMMARY

The following summary is intended to introduce the reader to various aspects of the applicant's teaching, but not to define any invention.

According to some aspects, there is provided a cooking apparatus, comprising a body defining an interior cooking chamber for cooking food; a combustion chamber coupled to the body, the combustion chamber including a combustion zone with a fuel supply port opening directly into the combustion zone, the combustion zone arranged to heat the cooking chamber; a fuel supply assembly coupled to the body, the fuel supply assembly including a fuel supply reservoir arranged to provide fuel to the fuel supply port; an air supply assembly coupled to the body, the air supply assembly including an air moving member arranged to move air towards an air supply port opening into the combustion chamber; and a baffle separating the combustion zone from the air supply port.

In any example, it may be that the baffle is within the combustion chamber separating the combustion zone from an air supply zone, the air supply port opening into the air supply zone.

In any example, it may be that the baffle is positioned such that the combustion zone is laterally encircled by a first set of walls, the first set of walls including a planar portion of the baffle and a curved combustion chamber wall portion.

In any example, it may be that the combustion chamber has a generally vertical longitudinal axis, and the combustion zone has a first area in a first plane tangential to the longitudinal axis and a second area in a second plane tangential to the longitudinal axis, the second plane below the first plane, and the first area is greater than the second area.

In any example, it may be that the baffle is removeable.

In any example, it may be that the baffle is resting loosely in the combustion chamber.

In any example, it may be that the baffle is secured to a removeable combustion chamber wall portion forming at least a part of the air supply opening.

In any example, it may be that the combustion chamber is laterally encircled by a cylindrical pot, the cylindrical pot including the curved combustion chamber wall portion.

In any example, it may be that the combustion chamber is laterally encircled by a second set of walls, the second set of walls including the curved combustion chamber wall portion and a flared duct portion.

In any example, it may be that the flared duct portion is the removeable combustion chamber wall portion.

In any example, it may be that the combustion chamber is a pellet burner pot, the fuel supply assembly is a pellet supply assembly and the fuel supply reservoir is a pellet hopper.

In any example, it may be that the fuel supply assembly includes an auger assembly, and the auger assembly includes a screw within a tube as a fuel supply conduit between the fuel supply reservoir and the fuel supply port, and the screw has a screw diameter that is less than 90% of the inner diameter of the tube.

In any example, it may be that the auger assembly further includes a motor assembly, and wherein the auger assembly is removeable from the cooking apparatus without the use of tools.

In any example, it may be that the screw and the motor assembly are removable from the auger assembly without the use of tools.

In any example, it may be that the pellet burner pot is removeable from the cooking apparatus without the use of tools.

In any example, it may be that the air supply assembly is removeable from the cooking apparatus without the use of tools.

In any example, it may be that a portion of the air supply assembly includes a pellet igniter, and the portion of the air supply assembly is removeable from the cooking apparatus without the use of tools.

In any example, it may be that the air moving member is a fan, and the fan may be a low cfm fan.

In any example, it may be that the body is an insulated body.

In any example, it may be that the insulated body includes a double walled construction.

In any example, it may be that the body is a Kamado-style body, a Kettle-style body, or a rectangular-style body.

In any example, it may be that the cooking apparatus further comprises an openable collection receptacle below the combustion chamber, wherein the combustion chamber includes a chamber ash aperture in a bottom of the combustion chamber leading to the collection receptacle, and an ash-shaker coupled to the body, the ash-shaker including a moveable member within the combustion chamber and an actuator outside the combustion chamber, the actuator connected to the moveable member to move the moveable member within the combustion chamber to encourage debris in the combustion chamber to fall through the chamber ash aperture and into the collection receptacle.

In any example, it may be that the actuator is a handle drivingly connected to the movable member.

In any example, it may be that the moving member is a plate with a plate ash aperture such that the actuator can be moved to move the plate to allow the plate ash aperture to cooperate with the chamber ash aperture such that the unburned debris falls out of the combustion chamber and into the collection receptacle.

In any example, it may be that the combustion chamber is suspended in a combustion plenum.

In any example, it may be that the combustion plenum is below the interior cooking chamber and is open to the interior cooking chamber at an upper end of the combustion plenum via a combustion aperture.

In any example, it may be that the combustion chamber is spaced from sidewalls of the combustion plenum such that a majority of a perimeter of the combustion aperture is above an open portion of the combustion plenum that is not occupied by the combustion chamber.

In any example, it may be that a floor of the interior cooking chamber opening into the combustion plenum is formed of a floor material that is at least 90% steel, at least 90% aluminum, at least 90% ceramic, or at least 90% of a combination of steel, aluminum, and/or ceramic.

In any example, it may be that the floor is formed of the floor material surrounds the combustion aperture.

In any example, it may be that the cooking apparatus further comprises a central baffle plate over the combustion aperture, the central baffle plate formed of a central baffle plate material that is at least 90% steel or at least 90% ceramic.

In any example, it may be that the openable collection receptacle is below the combustion plenum and arranged to collect debris falling through the combustion plenum from the floor of the interior cooking chamber and the combustion chamber.

According to some aspects, there is provided a cooking apparatus, comprising a body defining an interior cooking chamber for cooking food; a combustion chamber below the interior cooking chamber and open to the interior cooking chamber at an upper end of the combustion chamber via a combustion aperture in a lower end of the interior cooking chamber, and a floor of the interior cooking chamber covering all of the lower end of the interior cooking chamber, the floor surrounding the combustion aperture and opening into the combustion aperture, the floor formed of a floor material that is at least 90% steel, at least 90% aluminum at least 90% ceramic, or at least 90% of a combination of steel, aluminum, and/or ceramic.

In any example, it may be that the floor of the cooking chamber is formed of removeable tiles.

In any example, it may be that the removeable tiles are resting loosely in the internal cooking chamber.

In any example, it may be that the cooking apparatus further comprises a combustion plenum below the interior cooking chamber and open to the interior cooking chamber at an upper end of the combustion plenum via the combustion aperture, and wherein the combustion chamber is suspended in the combustion plenum, the combustion chamber spaced from sidewalls of the combustion plenum such that a majority of a perimeter of the combustion aperture is above an open portion of the combustion plenum that is not occupied by the combustion chamber.

In any example, it may be that the combustion chamber is a pellet burner pot, and the cooking apparatus further comprises a pellet supply assembly including a pellet hopper and an auger operable to carry pellets from the pellet hopper to the pellet burner pot.

In any example, it may be that the cooking apparatus further comprises an openable collection receptacle below the combustion plenum and arranged to collect debris falling through the combustion plenum from the interior cooking chamber and the combustion chamber.

In any example, it may be that the body includes a lid and a base together forming the cooking chamber, and the floor covers about all of an interior surface of the base.

According to some aspects, there is provided a cooking apparatus, comprising a body defining an interior cooking chamber for cooking food; a combustion plenum below the interior cooking chamber and open to the interior cooking chamber at an upper end of the combustion plenum via a combustion aperture; a combustion chamber suspended in the combustion plenum, the combustion chamber spaced from sidewalls of the combustion plenum such that a majority of a perimeter of the combustion aperture is above an open portion of the combustion plenum that is not occupied by the combustion chamber; a floor of the interior cooking chamber opening into the combustion plenum; and an openable collection receptacle below the combustion plenum and arranged to collect debris falling through the combustion plenum from the interior cooking chamber and the combustion chamber.

In any example, it may be that the floor is formed of a floor material that is at least 90% steel, at least 90% aluminum, at least 90% ceramic, or at least 90% of a combination of steel, aluminum, and/or ceramic.

In any example, it may be that the internal cooking chamber includes generally vertical sidewalls with a lower surface between the generally vertical sidewalls, and the floor that is formed of the floor material covers all of the lower surface of the internal cooking chamber between the generally vertical sidewalls.

### BRIEF DESCRIPTION OF THE DRAWINGS

The drawings included herewith are for illustrating various examples of articles, methods, and apparatuses of the present specification and are not intended to limit the scope of what is taught in any way. In the drawings:
Figure 1 is a perspective view of a cooking apparatus;
Figure 2 is a cross sectional view of the cooking apparatus of Figure 1;
Figure 3 is a perspective cross sectional view of a portion of the cooking apparatus of Figure 1;
Figure 4 is a cross sectional view of a portion of the cooking apparatus of Figure 1;
Figure 5 is a cross sectional view of a portion of another cooking apparatus;
Figure 6 is a partially exploded perspective cross sectional view of a portion of the cooking apparatus of Figure 1;
Figure 7 is another perspective cross sectional view of a portion of the cooking apparatus of Figure 1;
Figure 8 is a top view of a portion of the cooking apparatus of Figure 1;
Figure 9 is a bottom perspective view of a portion of the cooking apparatus of Figure 1 with an ash-shaker in a first configuration;
Figure 10 is a bottom perspective view of a portion of the cooking apparatus of Figure 1 with an ash-shaker in a second configuration;
Figure 11 is another cross sectional view of a portion of the cooking apparatus of Figure 1;
Figure 12 is another partially exploded perspective cross sectional view of a portion of the cooking apparatus of Figure 1;
Figure 13 is another partially exploded perspective cross sectional view of a portion of the cooking apparatus of Figure 1;
Figure 14 is a partially exploded perspective view of a portion of the cooking apparatus of Figure 1;
Figure 15 is an exploded view of another portion of the cooking apparatus of Figure 1;
Figure 16 is a right side perspective cross sectional view of a portion of another cooking apparatus;
Figure 17 is a front perspective cross sectional view of the cooking apparatus of Figure 16;
Figure 18 is a left side perspective cross sectional view of the portion of the cooking apparatus of Figure 16;
Figure 19 is a partially exploded view of the portion of the cooking apparatus of Figure 16; and,
Figure 20 is an exploded view of another portion of the cooking apparatus of Figure 16.

### DETAILED DESCRIPTION

Various apparatuses or processes will be described below to provide an example of an embodiment of each claimed invention. No embodiment described below limits any claimed invention and any claimed invention may cover processes or apparatuses that differ from those described below. The claimed inventions are not limited to apparatuses or processes having all of the features of any one apparatus or process described below or to features common to multiple or all of the apparatuses or process described below. It is possible that an apparatus or process described below is not an embodiment of any claimed invention. Any invention disclosed in an apparatus or process described below that is not claimed in this document may be the subject matter of another protective instrument, for example, a continuing patent application, and the applicants, inventors or owners do not intend to abandon, disclaim, or dedicate to the public any such invention by its disclosure in this document.

Although method steps may be described (in the disclosure and/or in the claims) in a sequential order, such methods may be configured to work in alternate orders. In other words, any sequence or order of steps that may be described does not necessarily indicate a requirement that the steps be performed in that order. The steps of methods described herein may be performed in any order that is practical. Further, some steps may be performed simultaneously.

Furthermore, it will be appreciated that for simplicity and clarity of illustration, where considered appropriate, reference numerals may be repeated among the figures to indicate corresponding or analogous elements. In addition, numerous specific details are set forth in order to provide a thorough understanding of the example embodiments described herein. However, it will be understood by those of ordinary skill in the art that the examples described herein may be practiced without these specific details. In other instances, well-known methods, procedures, and components have not been described in detail so as not to obscure the examples described herein.

As used herein, the wording "and/or" is intended to represent an inclusive - or. That is, "X and/or Y" is intended to mean X or Y or both, for example. As a further example, "X, Y, and/or Z" is intended to mean X or Y or Z or any combination thereof.

### General Description of a Cooking Apparatus

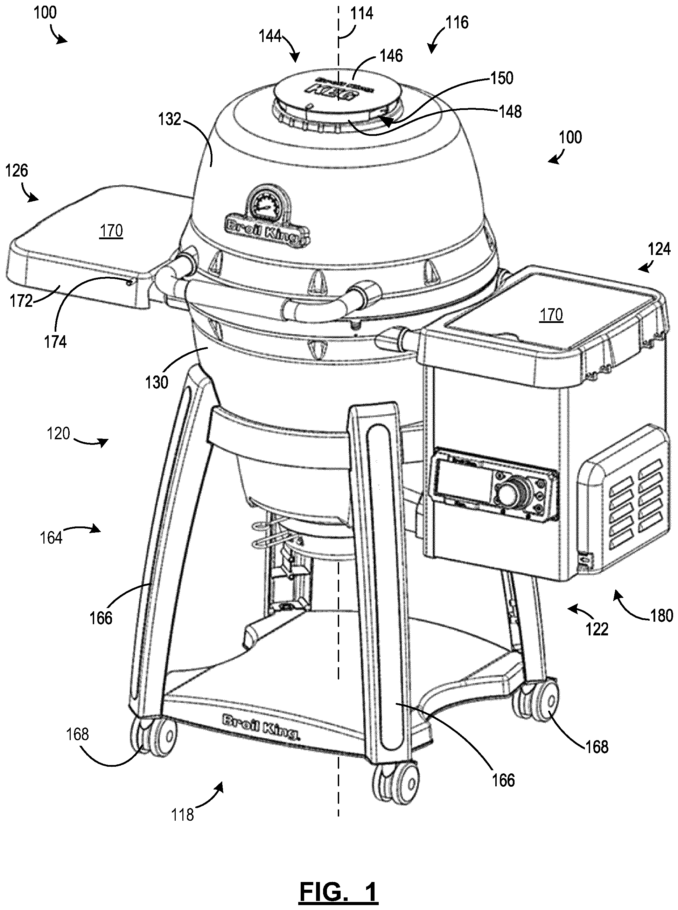

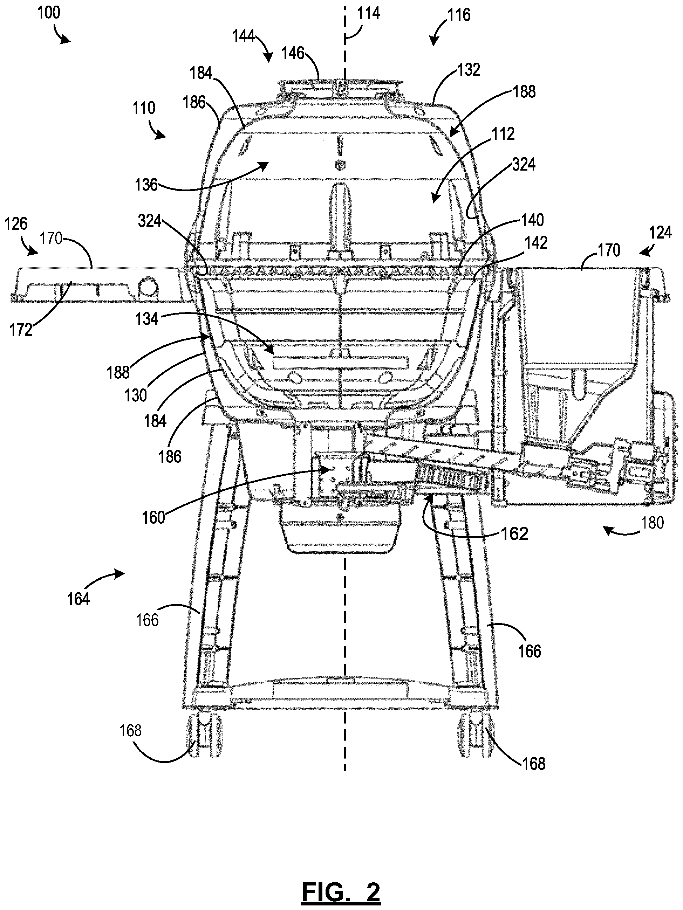

A cooking apparatus 100 is exemplified in Figures 1 and 2. The cooking apparatus 100 includes a body 110 defining an interior cooking chamber 112 for cooking food. The cooking apparatus 100 has a vertical axis 114, a top end 116, a bottom end 118 opposite the top end 116, a front side 120, a rear side 122 opposite the front side 120, a right side 124, and a left side 126 opposite the right side 124.

The body 110 is an openable body such that a user may open the body 110 to access the interior cooking chamber 112 (e.g., to add or remove a food item from the interior cooking chamber 112). The body 110 includes a plurality of body portions such that the body 110 may be opened. The exemplary body 110 includes a cooking chamber base 130 and a cooking chamber lid 132, although in other examples the cooking apparatus 100 may have another arrangement of openable body portions. The cooking chamber base 130 is shaped to form a cooking chamber lower end 134 of the interior cooking chamber 112, and the cooking chamber lid 132 is shaped to form a cooking chamber upper end 136 of the interior cooking chamber 112.

The cooking chamber lid 132 and the cooking chamber base 130 are shown in a closed configuration in Figures 1 and 2, however a user may separate the cooking chamber lid 132 and the cooking chamber base 130 to open the interior cooking chamber 112. The exemplary cooking chamber lid 132 and cooking chamber base 130 are joined by a hinge at the rear side 122 of the cooking apparatus 100. The cooking chamber lid 132 and the cooking chamber base 130 may be opened by, e.g., lifting the cooking chamber lid 132 to separate a forward portion of the cooking chamber lid 132 from a forward portion of the cooking chamber base 130 while the cooking chamber lid 132 remains attached to the cooking chamber base 130 at the rear side of the cooking apparatus 100 via the hinge. In other examples, the cooking chamber lid 132 may be removable from the cooking chamber base 130 entirely (e.g., the hinge can be released), and/or secured to the cooking chamber base 130 via an alternative fastener other than the hinge (e.g., a cord, a post allowing for a lateral pivot movement of the lid, or a threaded fastener).

The body 110 includes a cooking grid 140 for holding food items within the interior cooking chamber 112. The cooking grid 140 rests loosely within the interior cooking chamber 112 on an upper shelf 142 within the cooking chamber 112. In other examples, alternative surfaces may be provided for holding food items within the interior cooking chamber 112, such as a board or plate. In some examples, multiple surfaces may be provided for holding food items within the interior cooking chamber 112, such as two grids, two plates, or a grid and a plate.

The body 110 includes a vent 144 to ambient. The vent 144 allows air to flow between the cooking chamber 112 and the environment. The vent 144 is an adjustable vent with a plurality of settings to allow the user control over the amount of air flowing through the cooking chamber 112. The vent 144 includes a lidded frame 146 with a rotatable baffle 148. The rotatable baffle 148 may be used to block all or a portion of a vent aperture 150 in the lidded frame 146. For example, the aperture 150 may be a single aperture and the vent baffle 148 may be used to block all or a portion of the aperture, or the aperture 150 may be a set of two or more apertures and the vent baffle 148 may be used to block all or a portion of one or more of the apertures.

In the exemplary embodiment the vent 144 cooperates with air flow introduced into a combustion chamber 160 via an air supply system 162, and air may flow in through the combustion chamber 160 and out through the vent 144 (e.g., with the amount of air flow controlled to control cooking characteristics such as the temperature within the cooking chamber 112). The vent 144 is at the upper end 116 of the cooking apparatus 100. The vent 144 is in the cooking chamber lid 132. Air may flow into the cooking apparatus 100 at the lower end 118. Air may flow into the cooking apparatus 100 through the cooking chamber base 130. For example, air may flow into the cooking apparatus 100 through the combustion chamber 160), through the cooking chamber 112, and out the vent 144 at the upper end 116. However, it will be understood that in some examples a cooking apparatus may include more than one vent in addition to or in alternative to introducing air into the combustion chamber. For example, the cooking apparatus may include a second vent at the lower end that does not lead directly into the combustion chamber.

The exemplary cooking apparatus 100 also includes a stand 164 coupled to the body 110 to support the body 110 on an environmental surface (e.g., a patio or deck). The body 110 is resting loosely on the stand 164, however in other examples the body 110 may be secured to the stand 164 (e.g., via threaded fasteners or releasable clasps). The stand 164 includes a plurality of legs 166. The legs 166 raise the body 110 above the ground to a convenient height (e.g., at least half a meter). The stand 164 also includes a plurality of wheels 168. The wheels 168 improve the maneuverability of the cooking apparatus 100.

It is to be understood that in some examples the cooking apparatus 100 may not include the stand 164. The cooking apparatus 100 may include an alternative support structure for the body 110 (e.g., a smaller stand or a set of feet each secured to the body 110) or no support structure at all (e.g., the body 110 may rest on the ground directly).

The exemplary cooking apparatus 100 also includes a work surface 170 mounted to an exterior of the body 110. The exemplary cooking apparatus 100 includes two work surface 170, one on the right side 124 and one on the left side 126. The work surface 170 on the left side 126 is part of a removeable tray 172 held in place by retractable pins 174 that a user may depress to release the tray 172. The work surface 170 on the right side 124 may be part of a fuel supply system 180.

It will be understood that the cooking apparatus may also be provided without a work surface, or with an alternative or additional work surface. All or none of the work surfaces may be removeable, and may be held in position with the retractable pins 174 or any other releasable fastener.

### Insulated Cooking Apparatus

In accordance with this aspect, the cooking apparatus 100 is an insulated cooking apparatus. The cooking apparatus 100 may include a double walled construction to retain heat within the cooking chamber 112. The cooking apparatus 100 may be a Kamado-style cooking apparatus 100. This aspect may be used by itself or in combination with one or more of the other aspects set out herein. The cooking apparatus 100 may include any one or more of the features or aspects set out herein.

As exemplified in Figure 2, the body 110 is an insulated body. The walls of the cooking chamber 112 are insulated to inhibit heat loss. While the body 110 may be insulated in various ways (e.g., via walls of the cooking chamber 112 being formed of a thick layer of ceramic or other earthen material), the exemplary body 110 is insulated via a double walled construction.

The body 110 includes an inner wall 184 and an outer wall 186 spaced from the inner wall 184, with an insulation gap 188 between the inner wall 184 and the outer wall 186. The insulation gap 188 is filled with insulation as exemplified, although it will be understood that in some examples the insulation gap 188 may not be filled with insulation (e.g., filled with air or a vacuum).

In the illustrated example, each of the inner wall 184 and the outer wall 186 is formed of metal, although it is to be understood that in some examples the wall or walls of the body may be formed of metal, ceramic, or any combination thereof. In some examples, each of the inner wall 184 and the outer wall 186 is formed of aluminum (e.g., the material forming the wall is at least 90% aluminum) or steel (e.g., the material forming the wall is at least 90% steel). The wall or walls may also be formed of ceramic (e.g., the material forming the wall is at least 90% ceramic). For example, the inner wall 184 and/or the outer wall 186 may be formed of die cast aluminum, enameled steel, stainless steel, carbon steel and/or ceramic. The exemplary inner wall 184 and/or outer wall 186 may be coated or covered with a weather coating such as a powder coating. However, it will be understood that in some examples, the body 110 may be formed of a ceramic material (e.g., at least 90% ceramic) instead of metal (e.g., a single-walled ceramic construction or a double-walled construction with one or both walls formed of a ceramic material).

The exemplary body 110 is a Kamado-style body. A Kamado-style cooker body is a generally egg-shaped, insulated body enclosing a cooking chamber. The cooking chamber of a Kamado-style body is accessible by opening an upper lid (e.g., the cooking chamber lid 132), with a cooking surface supported by a lower base (e.g., the cooking grid 140 supported by the cooking chamber base 130). It is to be understood that in some examples, the cooking apparatus 100 may be an insulated apparatus without being a Kamado-style body and/or may be a Kamado-style body without including a double-walled construction and/or a ceramic shell or a ceramic insert. It is to be understood that in some examples the body (e.g., body 110) may also be configured in alternative styles, for example the body may be a Kettle-style body or a rectangular-style body, rather than a Kamado-style body.

### Combustion Chamber Open to the Cooking Chamber

In accordance with this aspect, the combustion chamber 160 is open to the cooking chamber 112. A combustion chamber upper end may be open to the cooking chamber 112. The combustion chamber 160 may be beneath the cooking chamber 112. This aspect may be used by itself or in combination with one or more of the other aspects set out herein. The cooking apparatus 100 may include any one or more of the features or aspects set out herein.

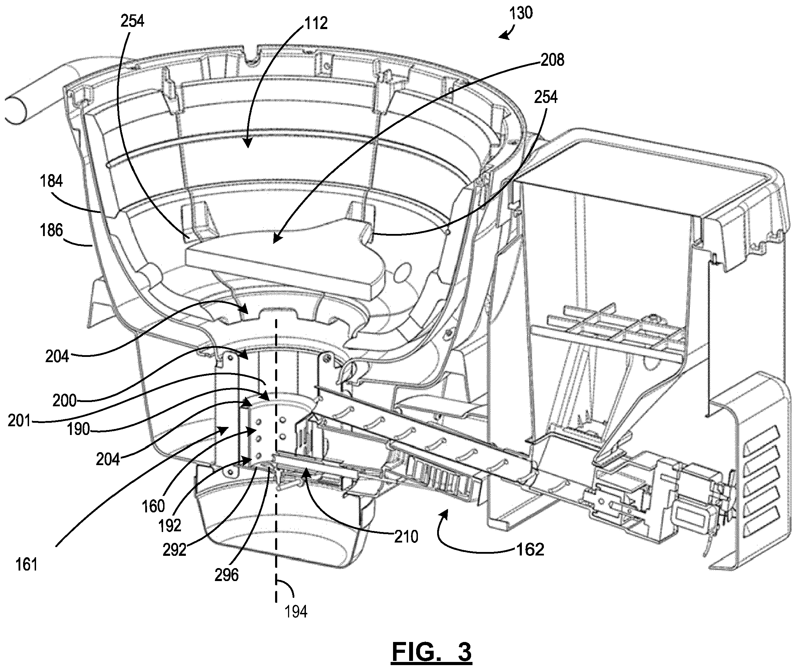

As exemplified in Figure 3, the combustion chamber 160 is coupled to the body 110. The combustion chamber 160 exemplified is mounted to the cooking chamber base 130. The combustion chamber 160 has a combustion chamber upper end 190 and a combustion chamber lower end 192 with a combustion chamber longitudinal axis 194 extending generally vertically within the combustion chamber 160 between the combustion chamber lower end 192 and the combustion chamber upper end 190. As exemplified, the combustion chamber axis 194 is the same as the cooker vertical axis 114.

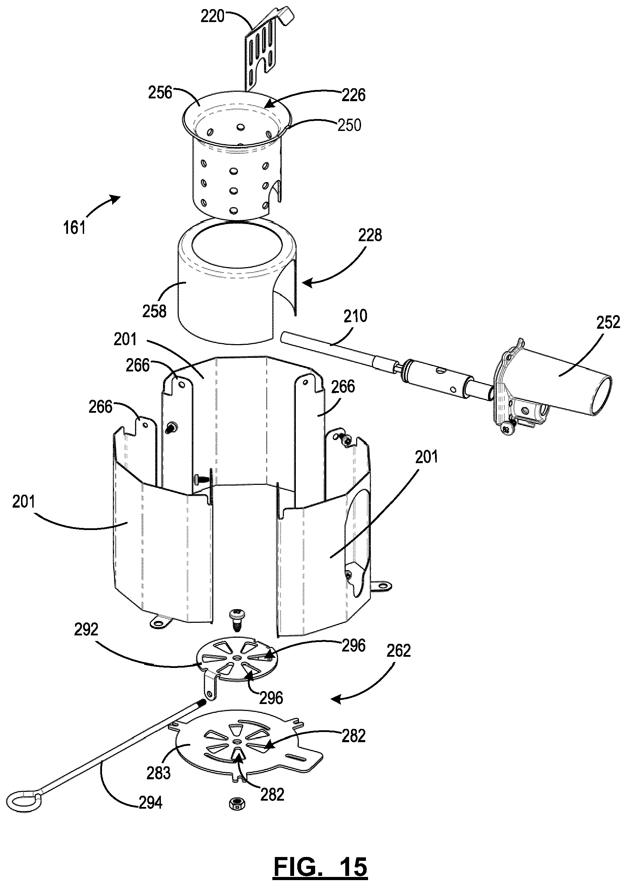

The combustion chamber 160 is arranged to heat the cooking chamber 112. In the exemplary embodiment, the combustion chamber upper end 190 is open to the cooking chamber 112. The combustion chamber upper end 190 may open directly into the cooking chamber 112, or, as in the exemplary embodiment, the combustion chamber upper end 190 may open into an intermediary structure. In the exemplary embodiment the combustion chamber upper end 190 opens directly into a combustion plenum 200 (e.g., an open plenum laterally bounded by walls 201, such as by curved walls to form a generally cylindrical plenum as exemplified in Figures 3 and 15) that opens directly into the cooking chamber 112 (e.g., via a combustion aperture 202 in a cooking chamber lower end 134 of the interior cooking chamber 112).

A combustion chamber aperture 204 in the combustion chamber upper end 190 opens out of the combustion chamber. The combustion chamber aperture 204 is a relatively large opening. The combustion chamber aperture 204 may have a width that is at least 75%, at least 80%, or at least 90% of the width of the combustion chamber 160 at the combustion chamber's widest point. The combustion chamber aperture 204 may have a length that is at least 75%, at least 80%, or at least 90% of the length of the combustion chamber 160 at the combustion chamber's widest point. In the exemplary embodiment the width and the length of the combustion chamber aperture 204 are each more than 90% of the width and the length of the combustion chamber 160.

In the exemplary embodiment, the combustion chamber 160 is a double-walled cylindrical burner pot 161 with a width and a length that are approximately equal to one another, although it is to be understood that the combustion chamber 160 may be another shape in another example (e.g., a cuboid or irregular shape).

The exemplary combustion chamber 160 is below the cooking chamber 112, although it is to be understood that in other examples the combustion chamber may be otherwise arranged relative to the cooking chamber 112. Having the combustion chamber 160 below the cooking chamber 112 minimizes the need to redirect heat (e.g., hot air) as it moves from the combustion chamber 160 to the cooking chamber 112. The exemplary combustion chamber 160 is straight below the cooking grid 140 (Figure 2). The exemplary cooking apparatus 100 includes a diverting structure (e.g., a centre baffle plate 208 to deflect or regulate the flow or passage of fluids such as air and grease) between the cooking grid 140 and the combustion chamber 160 to inhibit particles from falling from the cooking grid 140 into the combustion chamber 160.

The exemplary combustion chamber 160 is centered below the cooking chamber 112, although it is to be understood that in other examples the combustion chamber may be otherwise arranged relative to the cooking chamber 112. Having the combustion chamber 160 centered below the cooking chamber 112 facilitates even heat distribution.

A pellet igniter 210 extends into the combustion chamber 160. The pellet igniter 210 is coupled to the body 110 and extends into the combustion chamber from a power source outside the body 110 (e.g., a battery or other onboard power source, or a cord that can be plugged into an electrical outlet). The pellet igniter 210 is configured to provide sufficient energy to ignite pellets in the combustion chamber. As exemplified, the pellet igniter 210 is a hot rod.

### Combustion Chamber Divider

In accordance with this aspect, a combustion chamber 160 is divided by a baffle into a combustion zone separated from the air supply port. In some examples, the combustion zone is separated from an air flow zone within the combustion chamber. A fuel supply port opens into the combustion chamber (e.g., into the combustion zone) and an air supply port opens into the combustion chamber (e.g., into the air flow zone). This aspect may be used by itself or in combination with one or more of the other aspects set out herein. The cooking apparatus 100 may include any one or more of the features or aspects set out herein.

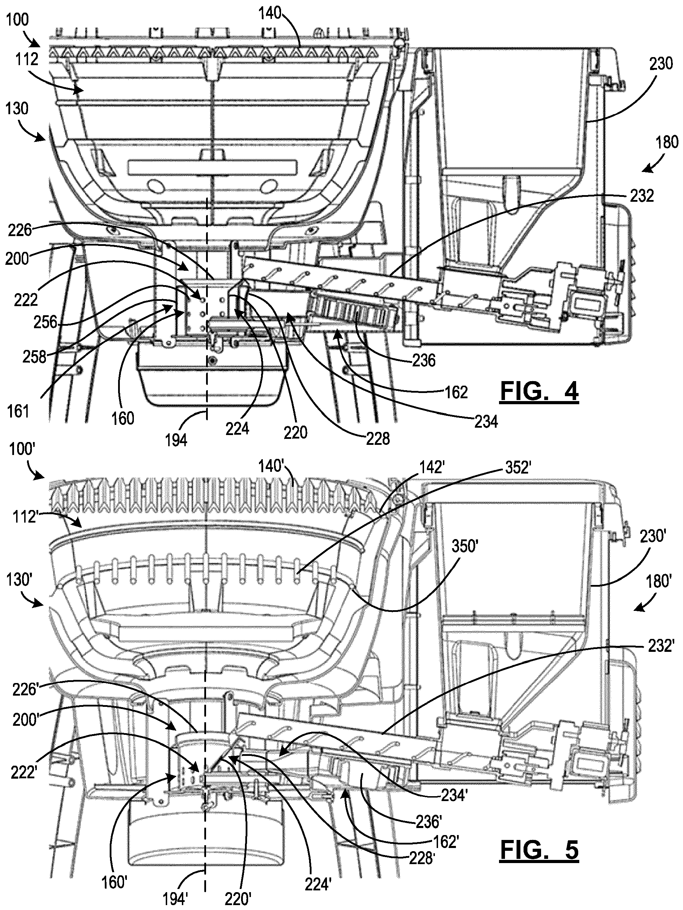

As exemplified in Figures 4 and 5, a baffle 220, 220' (e.g., a grate) is within the combustion chamber 160, 160'. Figure 5 exemplifies a second example cooking apparatus 100' which is similar in many respects to cooking apparatus 100. Like features are indicated by like reference characters with the addition of an apostrophe. As exemplified in Figures 4 and 5, the baffle 220, 220' may divide the combustion chamber into a combustion zone 222, 222' and an air flow zone 224, 224'. The combustion chamber 160, 160' may be any shape, such as a cuboid or cylindrical shape (e.g., the cylindrical shape of the exemplary embodiments).

As exemplified, the combustion chamber 160, 160' includes a fuel supply port 226, 226' (e.g., the open upper end as exemplified, although it will be understood that a dedicated fuel supply port may be used in other examples) and an air supply port 228, 228' that is separate from the fuel supply port 226, 226'). The fuel supply port 226, 226' opens into the combustion zone 222, 222' (e.g., opens directly into the combustion zone, such as such that fuel provided through the fuel supply port will enter the combustion zone to be combusted). The air supply port 228, 228' opens into the air supply zone 224, 224' (e.g., such that the air may move freely through the air supply zone to pass through the baffle 220, 220' at multiple points to aid combustion in the combustion zone).

The combustion chamber 160 is laterally encircled by a set of walls. As exemplified in Figures 4 and 15, the set of walls laterally encircling the combustion chamber includes the walls of a cylindrical pot 161. The cylindrical pot 161 is a double-walled structure which includes a liner 256 and a housing 258 (e.g., an air shroud to direct air from the air supply opening around the liner 256). Each of the liner 256 and the housing 258 include a curved wall portion, and, as exemplified, each is a cylindrical structure.

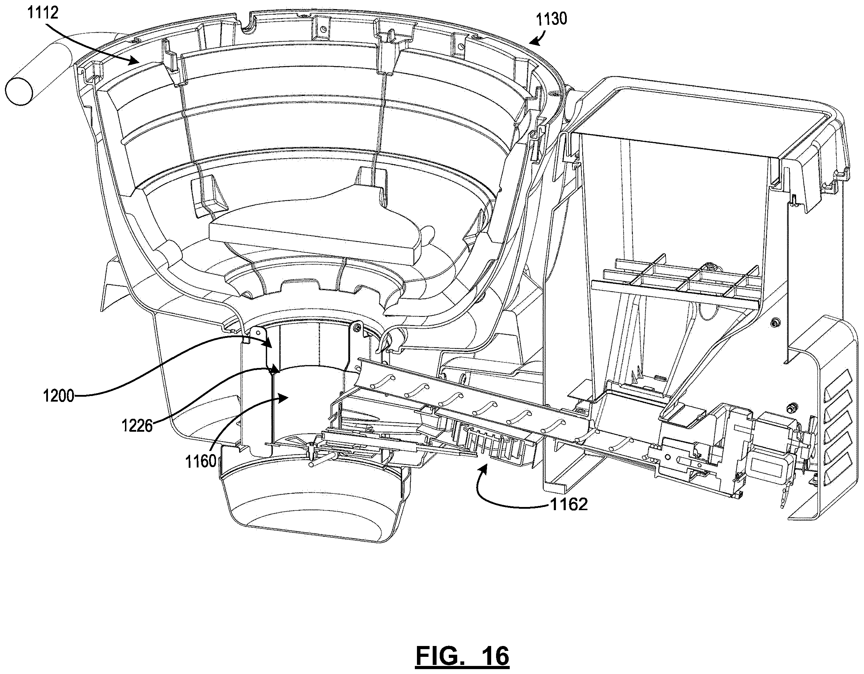

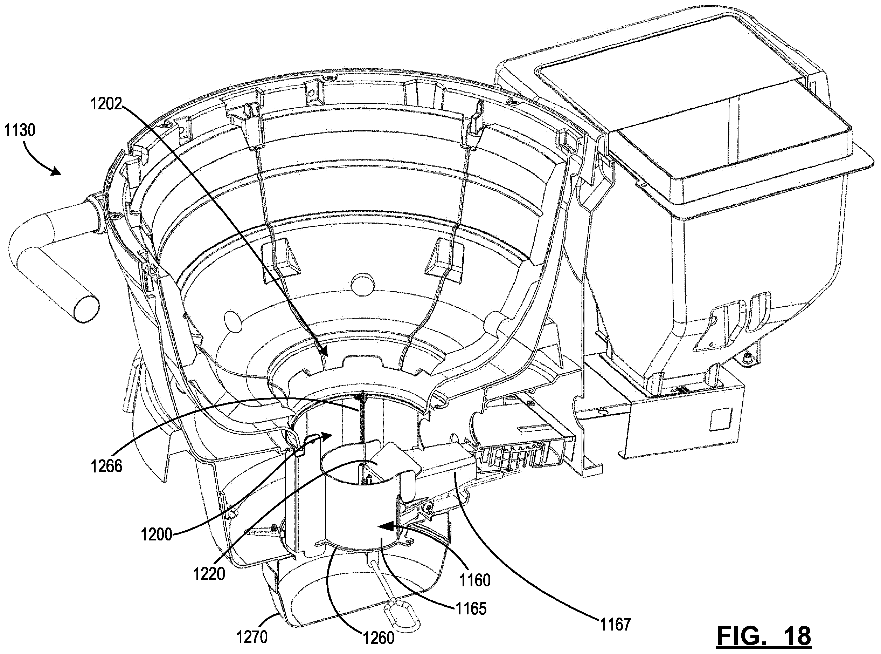

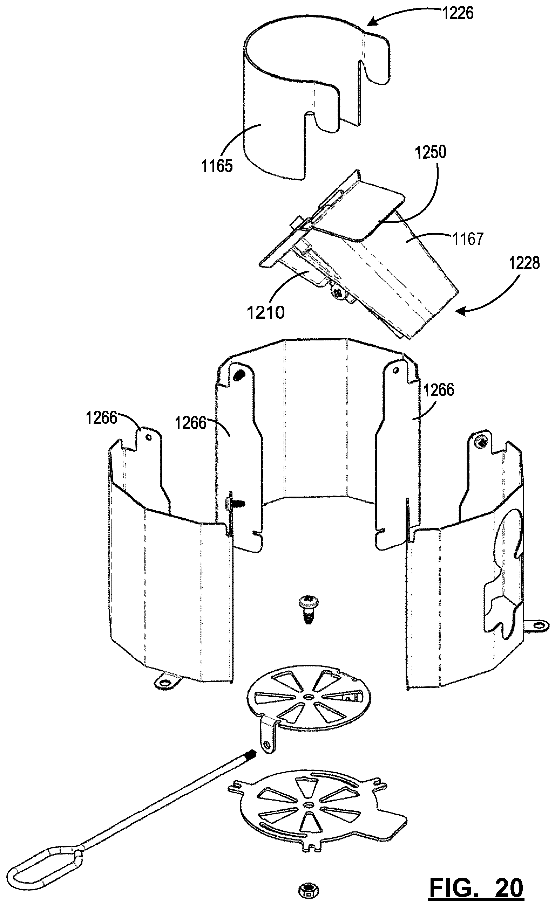

As exemplified in Figures 16 to 20, in some examples the combustion chamber 1160 is a single-walled chamber. Figures 16 to 20 exemplify a third example cooking apparatus 1100 which is similar in many respects to cooking apparatus 100. Like features are indicated by like reference characters incremented by 1000.

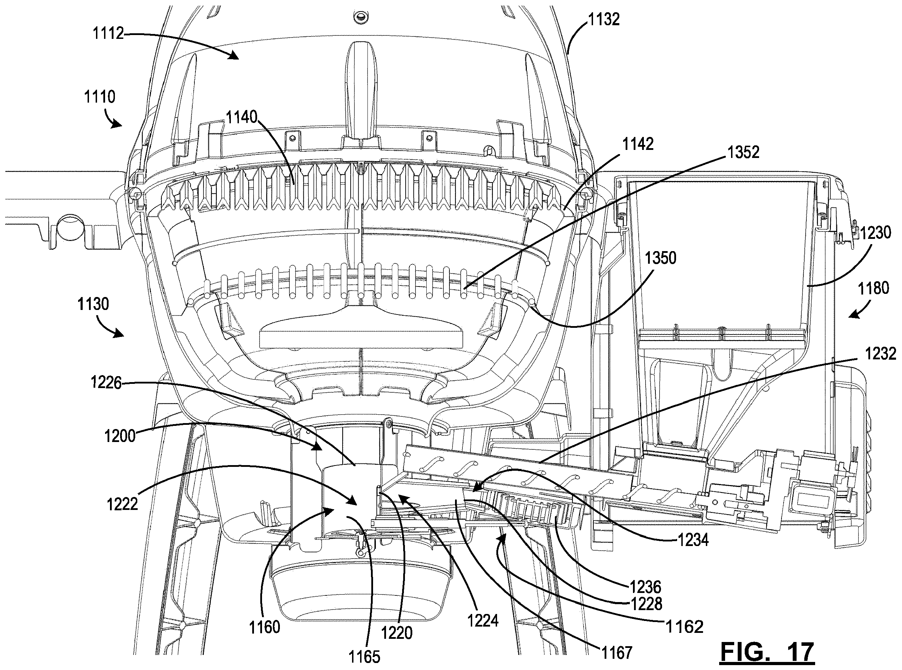

Like cooking apparatus 100, cooking apparatus 1100 includes a cooking chamber 1112 in a body 1110 that includes a lid 1132 and a base 1130. As exemplified in Figure 17, the cooking apparatus 1100 includes a cooking grid 1140 which rests loosely within the interior cooking chamber 1112 on an upper shelf 1142 within the cooking chamber 1112. The cooking apparatus 1100 may also include a shelf 1350 on which a charcoal grid 1352 may rest. At a lower end, the cooking chamber 1112 opens to a combustion plenum 1200 via a combustion opening 1202. The combustion plenum 1200 is formed by walls that are secured to the body 1110, and the combustion chamber 160 is suspended in the combustion plenum 1200. An openable collection receptacle 1270 is below the combustion plenum 1200.

As exemplified in Figures 16 to 20 the baffle 1220 (e.g., a grate confining fuel to the combustion zone, such as a metal grate) restrains the movement of loose material (e.g., pellet fuel) from the combustion zone 1222 to the air supply port 1228. The combustion chamber 1160 is laterally encircled by a set of walls that includes a curved combustion chamber wall portion 1165 and a flared duct portion 1167. The fuel supply port 1226 opens directly into the combustion zone 1222. A fuel supply system 1180 is arranged to supply fuel to the combustion zone 1222 through, e.g., a fuel supply conduit 1232 and the port 1226 from a fuel supply reservoir 1230. The air supply port 1228 opens into the flared duct portion 1167 (i.e., from the duct 1234 formed through the conduit 1252 from the air mover 1236 of the air supply assembly 1162). The flared duct portion 1167 is in the form of a duct with one end that is larger than the other. As exemplified, the flared duct portion 1167 increases in cross-sectional flow area towards the combustion zone 1222. The flared duct portion 1167 may form an air flow zone 1224 of the combustion chamber 1160.

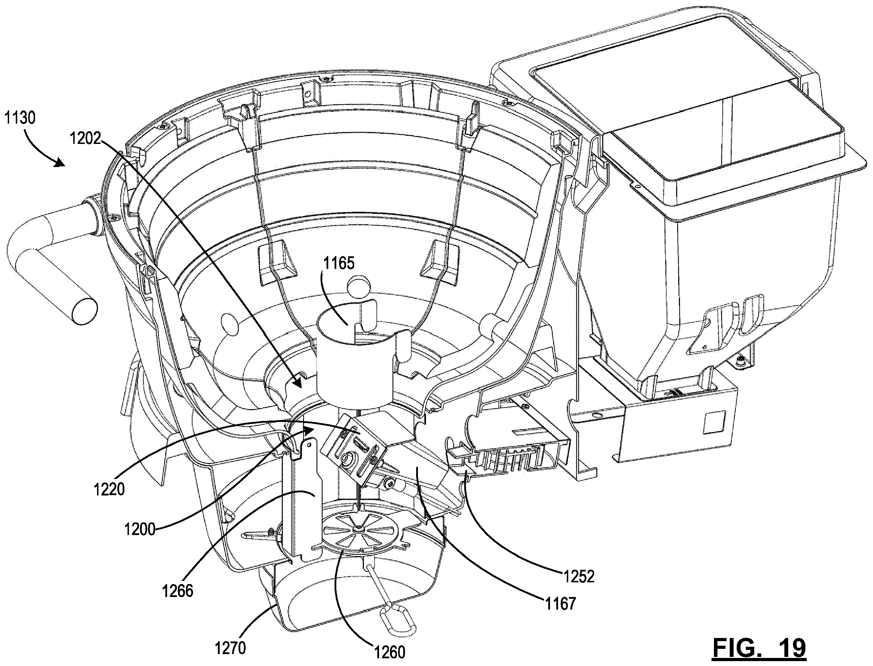

As exemplified in Figure 19, the air supply assembly and/or a part thereof is removeable without the use of tools (e.g., but simply lifting, by pulling it free of a friction fit, and/or by moving moveable fasteners such as by compressing spring tabs to free the flared duct portion and then lifting it out). As exemplified, the flared duct portion 1167 may be removeable. In some examples, an operator is able to lift or pull the flared duct portion 1167 out of the combustion plenum 1200 without the use of tools. As exemplified, the pellet igniter 210 may be secured to the air supply assembly or the part thereof that is removeable, and is illustrated secured to the flared duct portion 1167 and removeable with it. The operator may also be able to remove the curved wall portion 1165 in a similar manner (i.e., without the use of tools), and may remove the curved wall portion 1165 before removing the flared duct portion 1167, As exemplified in Figure 19. For example, the operator may lift the curved wall portion 1165 from off the seat 1260, and then pull the flared duct portion 1167 out through the combustion plenum 1200. As exemplified, the baffle 1220 may be secured to the removeable flared duct portion 1167 to be removed with the removeable flared duct portion 1167.

Referring again to Figures 4 and 5, as exemplified, a fuel supply assembly 180, 180' is coupled to the body. The fuel supply assembly 180, 180' includes a fuel supply reservoir 230, 230' and a fuel supply conduit 232, 232' leading from the fuel supply reservoir 230, 230' to the fuel supply port 226, 226' (e.g., to feed fuel from the reservoir into the combustion chamber via the fuel supply port). It will be understood that in some examples the cooking apparatus may include an alternative fuel supply assembly (e.g., an assembly with a conduit but without a reservoir, such that a user adds fuel manually to the conduit such as by scooping pellets into a chute), or the cooking apparatus may not include the fuel supply assembly (e.g., a user may add fuel manually through the fuel supply port).

An air supply assembly 162, 162' is also coupled to the body. The exemplified air supply assembly 162, 162' includes a duct 234, 234' (e.g., through an air inlet conduit 252) leading to the air supply opening 228, 228' and an air moving member 236, 236' arranged to move air through the duct 234, 234' towards the air supply opening 228, 228'. As exemplified, the air supply assembly 162, 162' is a fan assembly, and the air moving member 236, 236' is a fan. The use of an air supply zone may reduce the need for powered air movement. For example, a low power fan may be used. In some examples, e.g., because the fan is feeding the burner pot directly, the fan is a low CFM fan. In some examples, the fan has a voltage ranging between 12 and 220 volts. It will be understood that in some examples the cooking apparatus may include an alternative air supply assembly (e.g., an assembly with a duct but without an air moving member, such as a duct leading from ambient to the air supply port to allow air to be drawn in through the port), or the cooking apparatus may not include the air supply assembly (e.g., the air supply port may be a port opening directly from ambient into the combustion chamber).

The baffle 220, 220' creates the air flow zone 224, 224' within the combustion chamber 160, 160' by holding back fuel (e.g., whole pellets). The baffle 220, 220' is arranged to inhibit movement of fuel from the combustion zone 222, 222' to the air flow zone 224, 224' to maintain the air flow zone 224, 224' in an open state. An open air flow zone 224, 224' within the combustion chamber may encourage improved combustion.

The baffle 220, 220' may also or alternatively be arranged to retrofit the shape of the combustion zone 222, 222'. As exemplified, the baffle 220, 220' is shaped to adjust the shape of the combustion zone 222, 222' such that the volume of a lower portion of the combustion zone is less than the volume of an upper portion of the combustion zone that has an equal height to the lower portion. In the exemplary embodiments, the combustion chamber 160, 160' has a generally vertical longitudinal axis 194, 194'. The combustion zone 222, 222' has a first area in a first plane tangential to the longitudinal axis 194, 194' and a second area in a second plane tangential to the longitudinal axis 194, 194' where the second plane below the first plane, and the first area is greater than the second area.

As exemplified, the baffle 220, 220' may be a generally angled (i.e., not vertical) baffle and/or include an angled portion to reshape the combustion zone to have top dimensions (e.g., width and/or length) that are different from the bottom dimensions (e.g., width and/or length). However, it will be understood that the baffle may also be otherwise shaped (e.g., stepped or cooperating with a combustion chamber that has irregular dimensions).

The smaller dimensions of the lower end of the combustion zone 222, 222' facilitate different cooking types. A user may wish to use a small number of pellets (e.g., for a long and slow cook) or a larger number of pellets (e.g., for a shorter and faster cook). When a small number of pellets are used, the pellets may be advantageously arranged in the combustion zone 222, 222' when the baffle 220, 220' is used. The shape of the combustion zone 222, 222' may allow a user to increase the number of pellets per unit of height at the upper end of the combustion zone. The baffle may increase or decrease the burn pot volume with temperature settings (e.g., allowing pellets to burn with a small load at a low setting). However, it is to be understood that in some examples the baffle may not create a combustion zone with different dimensions at an upper end then those at a lower end (e.g., the baffle may simply separate the combustion zone from the air flow zone within the combustion chamber). Also or alternately, the differing dimensions of the upper and lower ends of the air flow zone may allow an airflow zone with a smaller volume to be used effectively for large and/or small fuel loads in the combustion zone.

In the exemplary embodiment the baffle 220, 220' cooperates with the walls of the combustion chamber 160, 160' to enclose one zone (i.e., the air flow zone 224, 224' as exemplified). However, it is to be understood that in some examples the baffle may separate the zones without enclosing either zone. For example, the baffle may be arranged such that each zone is open to the cooking chamber 112, 112' at the upper end of the zone.

The baffle 220, 220' may be positioned such that the combustion zone 222, 222' and the air flow zone 224, 224' have different volumes. The combustion zone 222, 222' may have a greater volume than the air flow zone 224, 224'. The baffle may be positioned such that a volume of the combustion zone 222, 222' is more than 50% of a volume of the interior of the combustion chamber 160, 160', at least 60% of a volume of the interior of the combustion chamber 160, 160', or at least 75% of a volume of the interior of the combustion chamber 160, 160'.

The exemplary baffle 220, 220' is removeable (e.g., as a single piece in the illustrated example). A user may remove the baffle 220, 220' to, e.g., clean or maintain the combustion chamber 160. The user may also or alternatively remove the baffle 220, 220' to use the combustion chamber 160 without the baffle (e.g., to use the entire interior volume of the combustion chamber 160 as a combustion zone). It will be understood that, in some examples, the baffle may not be removeable (e.g., where these advantages are not needed).

### Lift-Out Components

In accordance with this aspect, the baffle 220 is resting loosely in the combustion chamber 160. The baffle 220 may be removed without the use of tools. As exemplified, the baffle 220 may be removed by lifting the baffle 220 out of the combustion chamber 160. The user does not need to release a fastener (e.g., a threaded fastener or a latch) prior to lifting out the baffle 220. This aspect may be used by itself or in combination with one or more of the other aspects set out herein. The cooking apparatus 100 may include any one or more of the features or aspects set out herein.

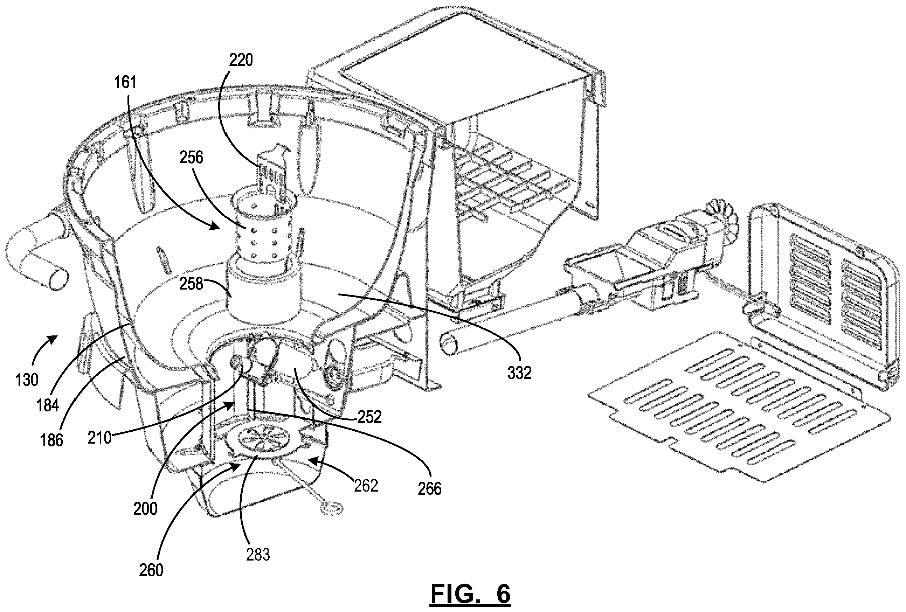

As exemplified in Figure 6, the baffle 220 can be lifted out of the combustion chamber 160. A user may open the cooking chamber 112, remove the central plate 208, and lift the baffle 220 up. The user does not need to release any fastener to lift the baffle 220 out of the combustion chamber 160. For example, the baffle 220 may be resting loosely on a shelf in the combustion chamber 160, or may include a finger held in a groove or slot that may be slid out without difficulty. As exemplified, the baffle 220 rests loosely on a shelf 250 formed by a portion of an upper rim of the burner pot 161.

One or more further component may also be removeable without the use of tools (e.g., a lift-out component). The central plate 208, the burner pot 161, the liner 256, the housing 258, the air inlet conduit 252, the starter assembly 210 may be removeable without the use of tools. For example, the central plate 208 may rest loosely on a shelf 254 formed in the cooking chamber 112 (see, e.g., Figure 3). The combustion chamber 160 (e.g., burner pot 161, including a liner 256 and/or a housing 258 may rest loosely on a shelf 260 (e.g., formed by an ash shaker assembly 262). The air inlet conduit 252 and/or starter assembly 210 may rest loosely on a shelf (e.g., on the shelf 260, held in position laterally by being inserted in through a wall of the plenum).

Lift-out components may be easier to replace, clean, and/or maintain. For example, a user may be more likely to clean the baffle 220 if the user is able to easily lift the baffle 220 out of the combustion chamber 160. Also or alternatively, lift-out components may facilitate alternate uses of the cooking apparatus 100. For example, the user may be more likely to remove the baffle 220 to cook with the entire combustion chamber as the combustion zone if the baffle 220 is loose.

### Combustion Chamber Suspended in Combustion Plenum

In accordance with this aspect, the combustion chamber 160 is suspended in a combustion plenum 200. The combustion plenum surrounds the combustion chamber 160 and opens directly into the cooking chamber 112. This aspect may be used by itself or in combination with one or more of the other aspects set out herein. The cooking apparatus 100 may include any one or more of the features or aspects set out herein.

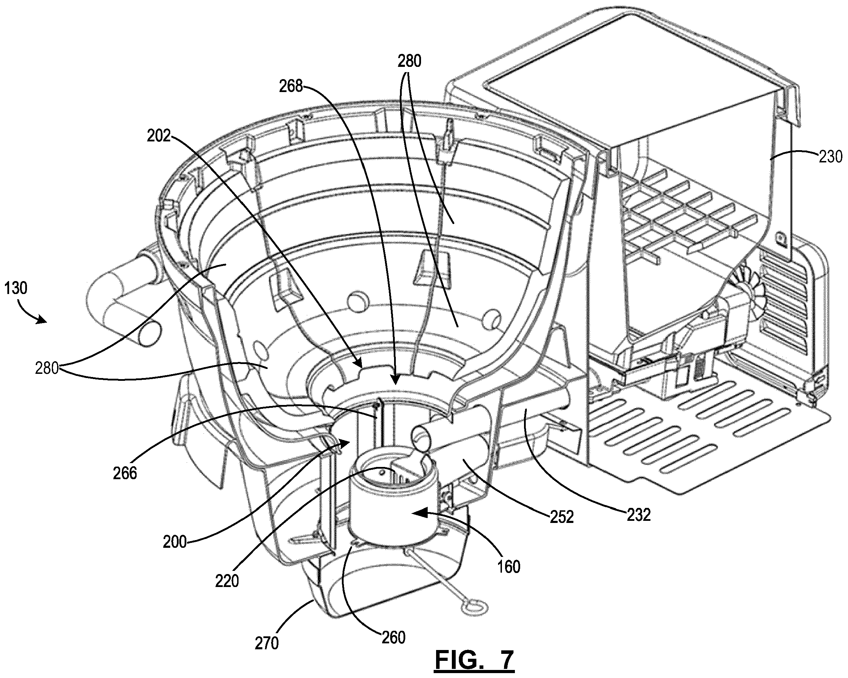

As exemplified in Figure 7, the combustion chamber 160 is suspended in a combustion plenum 200. The combustion chamber 160 rests on the shelf 260. The shelf 260 is secured to the walls of the combustion plenum 200. The combustion chamber 160 is held in position laterally on the shelf by a plurality of spacers 266 secured to the walls of the combustion plenum 200. The spacers 266 project into the combustion plenum 200 to inhibit lateral movement of the combustion chamber 160 when the combustion chamber 160 is resting on the shelf 260.

The combustion plenum 200 is below the interior cooking chamber 112. The combustion plenum 200 is open to the interior cooking chamber 112 at an upper end of the combustion plenum 200 via a combustion aperture 202 in a lower end of the cooking chamber 112. The combustion plenum 200 may facilitate air movement and/or the movement of particles around the combustion chamber.

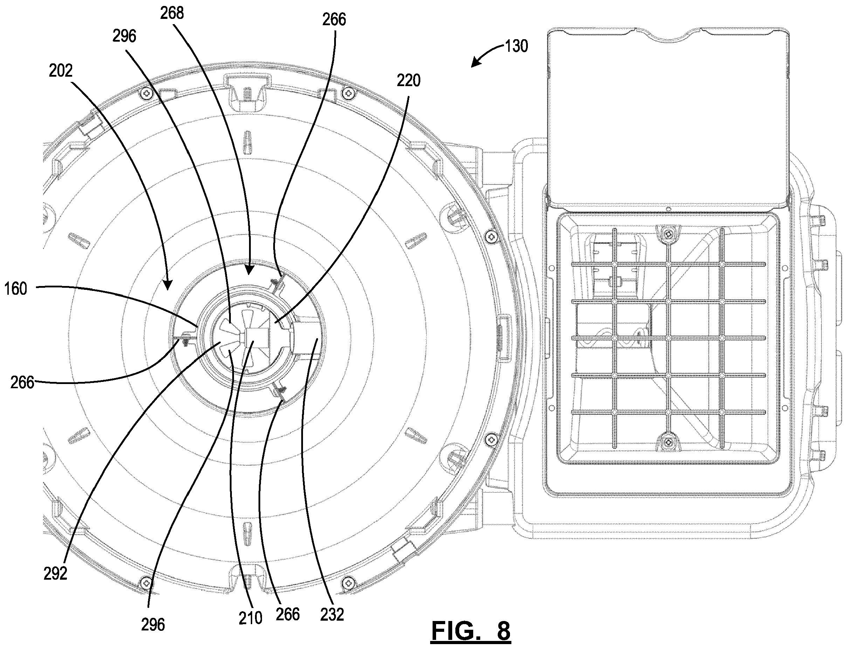

As exemplified in Figure 8, the combustion chamber 160 is suspended in the combustion plenum 200 in a position spaced from sidewalls of the combustion plenum 200. A majority of a perimeter portion 268 of the combustion aperture 202 is above an open portion of the combustion plenum 200 that is not occupied by the combustion chamber 160. Particles falling from the cooking chamber 112 around the perimeter 268 of the combustion aperture 202 will fall through the combustion plenum 200 past the combustion chamber 160 without falling into the combustion chamber 160.

The air flow conduit 252 and fuel conduit 232 extend through the combustion plenum 200 to the combustion chamber 160 suspended in the plenum. The combustion chamber 160 of the example cooking apparatus 100 is suspended at a position below the top of the combustion plenum 200 and above the bottom of the combustion plenum 200. However, it is to be understood that in some examples the combustion chamber 160 may not be spaced from the top and/or bottom of the combustion plenum 200 (e.g., where no air and/or particle flow is needed).

### Multi-purpose Collection Receptacle

In accordance with this aspect, the cooking apparatus 100 includes a multi-purpose collection receptacle positioned to receive debris from the combustion chamber 160 and the cooking chamber 112. The collection receptacle may be used to collect debris such as food particles from the cooking chamber 112 and debris such as ash from the combustion chamber 160. In some examples, the collection reception is below the combustion chamber 160 and the cooking chamber 112 such that debris may fall into the collection chamber. The collection receptacle may be below the combustion plenum 200. This aspect may be used by itself or in combination with one or more of the other aspects set out herein. The cooking apparatus 100 may include any one or more of the features or aspects set out herein.

Referring back to figure 7, the cooking apparatus 100 includes a collection receptacle 270. The collection receptacle 270 is a multi-purpose receptacle arranged to collect debris from the cooking chamber 112 and debris from the combustion chamber. In the exemplary embodiment the collection receptacle is below the combustion plenum 200 and below the cooking chamber 112 and combustion chamber 160 such that debris can fall through the plenum 200 into the collection chamber 270. It will be understood that in other examples, the collection receptacle may be otherwise arranged to collect debris from both the cooking and combustion chambers (e.g., to one side such that debris can be swept in by a user and/or below a sloped surface leading from one or the other chamber).

As exemplified, debris from the cooking chamber 112 can fall from the cooking grid 140 onto a floor 280 of the cooking chamber 112 and/or onto the central plate 208. If debris falls on the central plate 208 the debris can move from the plate baffle 208 onto the floor 280 (e.g., solid particles of food rolling off or liquid, such as grease, running off). The debris can move from the floor 280 through the combustion aperture 202 (e.g., rolling or running off). The debris from the cooking chamber 112 can fall through the combustion aperture 202 at a position around the perimeter 268, and fall past the combustion chamber through the combustion plenum and into the collection receptacle 270 below.

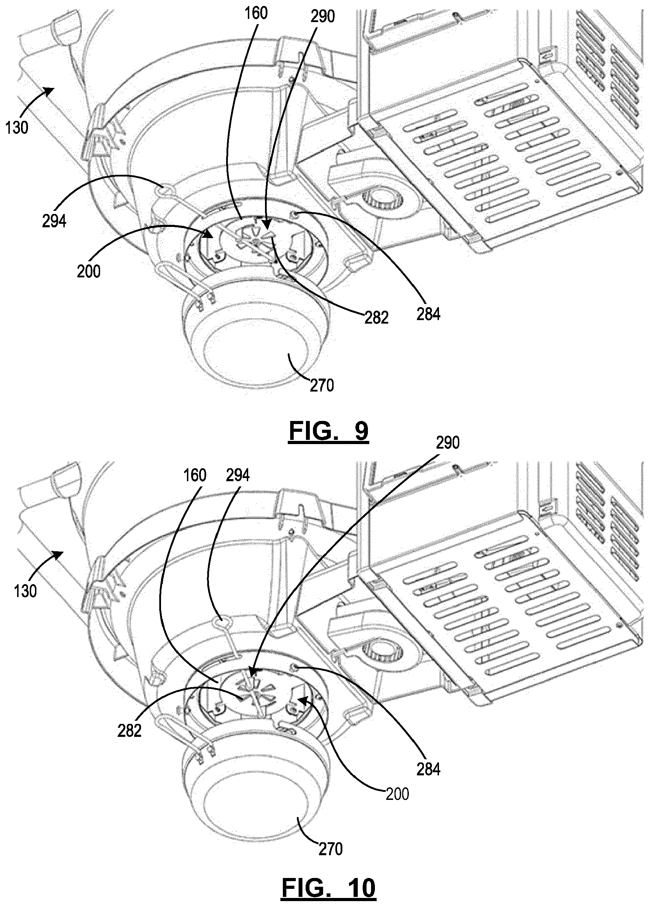

As exemplified in Figures 9 and 10, debris from the combustion chamber 160 can also fall into the collection receptacle 270. Since the combustion chamber 160 is suspended in the combustion plenum 200, the debris can fall from the combustion chamber 160 through the combustion plenum 200 and into the collection receptacle 270 below. The combustion chamber 160 includes a chamber ash aperture 282 in a bottom of the combustion chamber 160 through which ash may fall into the collection receptacle 270.

As exemplified in Figure 15 the chamber ash aperture 282 may be in a floor of the chamber 160. The floor of the chamber 160 may be formed by a floor plate 283 secured to the body 110. More specifically, as exemplified in Figures 6 and 15, the floor plate 283 is secured to the spacers 266, and the spacers 266 are secured to walls of the combustion plenum 200, and the walls of the combustion plenum 200 are secured to the body 110.

The collection receptacle 270 is an openable receptacle. The user may open the collection receptacle 270 to access collected debris (e.g., to dump the debris). The collection receptacle 270 is held on the cooking apparatus 100 by resting on projections 284 on the exterior of the walls of the combustion plenum. The projections 284 may be loosely received in grooves of the collection receptacle 270 such that the collection receptacle 270 may rest on the projections 284, and a user may rotate the collection receptacle 270 to release the collection receptacle 270 from the cooking apparatus 100 to access an interior of the collection receptacle 270.

While the collection receptacle 270 may be a generally cylindrical receptacle as exemplified, it will be understood that the collection receptacle may also be another shape. For example, the collection receptacle may be a generally rectangular tray or pan that may be slid out of a slot in the base of the body 110.

### Ash-Shaker

In accordance with this aspect, the cooking apparatus 100 includes an ash-shaker. The ash-shaker is operable to encourage ash in the combustion chamber 160 to fall through the chamber ash aperture 282 so that it may be collected in the collection receptacle. This aspect may be used by itself or in combination with one or more of the other aspects set out herein. The cooking apparatus 100 may include any one or more of the features or aspects set out herein.

As exemplified in Figures 9 and 10, an ash-shaker 290 is coupled to the body 110. The ash-shaker 290 includes a moveable member 292 (see Figures 3 and 8) within the combustion chamber 160 and an actuator 294 outside the combustion chamber 160. The exemplified actuator 294 extends outside of the body 110 such that a user may access the actuator 294 from outside the body 110.

The actuator 294 is connected to the moveable member 292 to move the moveable member within the combustion chamber 160 to encourage debris in the combustion chamber 160 to fall through the chamber ash aperture 282 and into the collection receptacle 270. As exemplified, the actuator 294 may be a handle drivingly connected to the movable member 292. The handle may be used to manually move the moveable member 292 that is within the combustion chamber from outside the combustion chamber 160. However, it will be understood that in some examples the actuator 294 could be an alternative actuator, such as a button configured to trigger an electrically-powered movement of the moveable member 292.

While various moveable members 292 may be used (e.g., rakes or scrapers), as exemplified the moving member 294 is a plate with a plate ash aperture 296 (see Figures 3, 8 and 15). The actuator 294 can be moved to move the plate to allow the plate ash aperture 296 to cooperate with the chamber ash aperture 282 such that the unburned debris falls out of the combustion chamber 160 and into the collection receptacle 270. Moving the actuator 294 can rotate the plate within the combustion chamber 160 such that the plate ash apertures 296 align with the chamber ash apertures 282. The actuator 294 can also be used to rotate the plate to dis-align the apertures (e.g., to prevent fuel from falling when a user wishes to retain the fuel, such as if the apertures are larger than the size of pellet fuel or if the apertures are smaller than the size of pellet fuel but the user wishes to retain even partial pellets).

### Pellet Cooker

In accordance with this aspect, the cooking apparatus 100 is a pellet cooker. The cooking apparatus 100 is adapted to burn pellet fuel. The pellet fuel may be, e.g., small and generally regular sized pieces of fuel. The pellet fuel may be, e.g., compressed organic matter or biomass such as wood. This aspect may be used by itself or in combination with one or more of the other aspects set out herein. The cooking apparatus 100 may include any one or more of the features or aspects set out herein.

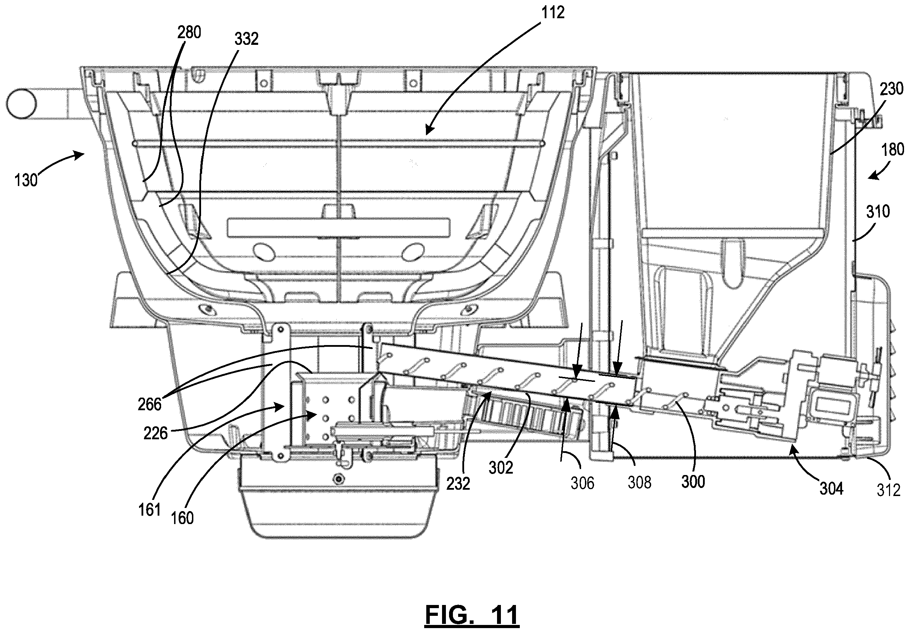

As exemplified in Figure 11, the cooking apparatus 100 is a pellet cooker. The pellet cooker includes a combustion chamber adapted to burn pellets. The combustion chamber 160 is a pellet burner pot 161. The pellet burner pot is a double-walled cylindrical pot having an outer shroud 258 and an inner perforated container 250 in which the baffle 220 is received. The pellet burner pot 161 is a relatively small size. The diameter of the pellet burner pot is less than half of the total diameter of the cooking chamber 112 at its widest point. In some examples, the pellet burner pot may have a diameter that is larger or smaller than exemplified (e.g., less than half, less than a third, less than a quarter, or less than an eighth of the diameter of the cooking chamber 112 at the widest point of the cooking chamber 112).

The cooking apparatus 100 may also or alternatively include a pellet supply assembly. In the exemplary embodiment, the fuel supply assembly 180 is a pellet supply assembly. The fuel supply reservoir 230 is a pellet hopper that may be filed with a plurality of pellets (e.g., hundreds). The fuel supply conduit 232 is an auger operable to carry pellets from the hopper to the fuel supply port 226 of the combustion chamber 160. The auger includes a screw 300 within a tube 302. A screw motor 304 is drivingly coupled to the screw 300 to turn the screw 300 to carry pellets along the tube 302.

### Small Diameter Auger Screw

In accordance with this aspect, the auger 232 includes a small-diameter screw. The screw 300 has a diameter that is less than the inside diameter of the tube 302. This aspect may be used by itself or in combination with one or more of the other aspects set out herein. The cooking apparatus 100 may include any one or more of the features or aspects set out herein.

As exemplified in Figure 11, the screw 300 has a diameter 306 that is less than the diameter 308 of the tube 302. The diameter 306 may be less than 95%, less than 90%, or less than 80% of the diameter 308. The use of a smaller diameter screw may facilitate removal of the screw 300 and/or may reduce jamming of the pellets within the tube 302.

The screw 300 may be formed of a small diameter spring wire (e.g., rather than heavy gauge steel). In some examples, the screw 300 may be manufactured using the same method as that of a spring.

### Removeable Auger Assembly

In accordance with this aspect, the auger assembly 232 is removeable (e.g., removeable from the hopper assembly 230). The auger assembly 232 is removeable without the use of tools. The screw motor 304, screw 300, and/or tube 302 may be removed from the cooker apparatus 100. This aspect may be used by itself or in combination with one or more of the other aspects set out herein. The cooking apparatus 100 may include any one or more of the features or aspects set out herein.

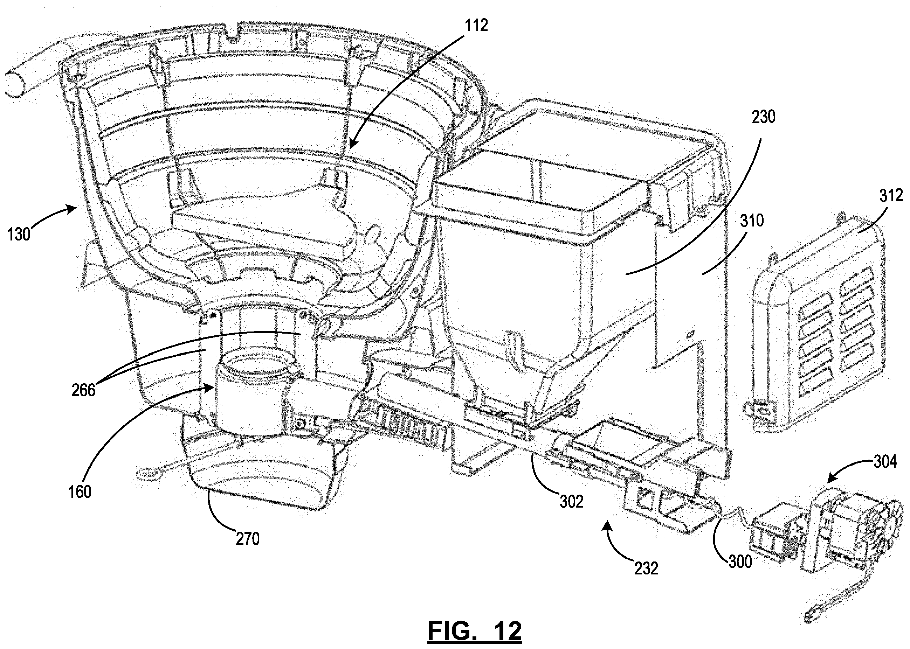

As exemplified in Figure 12, the auger assembly 232 is removeable from the combustion plenum 200 and the cooker apparatus 100. In some examples, the auger assembly 232 is removeable without requiring the use of tools. The auger motor 304 and the auger screw 300 may be withdrawn from the auger tube 302 without tools.

As in the exemplary embodiment, the auger assembly 232 may be covered by a pellet assembly housing 310. A venting panel 312 may be adjacent the screw motor 304 and covering a lateral side of the screw motor 304 and/or auger assembly 232. The venting panel 312 may be removeable from the rest of the pellet assembly housing 310 to allow the auger assembly 232 to be withdrawn (e.g., pulled laterally out of) the body 110.

In use, an operator may remove the venting panel 312 and then remove the auger assembly 232, the screw 300, the tube 302, and/or the motor 304 without the use of tools. To remove the auger assembly 232, the screw 300, the tube 302, and/or the motor 304 without the use of tools (e.g., a screwdriver), the operator may compress spring tabs and pull the auger assembly 232 from the cooker apparatus 100. If desired, the operator may also compress spring tabs and pull the screw 300 from the tube 302, again without using tools.

### Self-Cleaning Surfaces

In accordance with this aspect, the cooking apparatus 100 includes a self-cleaning surface. The self-cleaning surface is in the cooking chamber 112 and arranged to catch grease falling from the cooking grid 140. The self-cleaning surface is configured to vaporize the grease to inhibit the aggregation of grease. This aspect may be used by itself or in combination with one or more of the other aspects set out herein. The cooking apparatus 100 may include any one or more of the features or aspects set out herein.

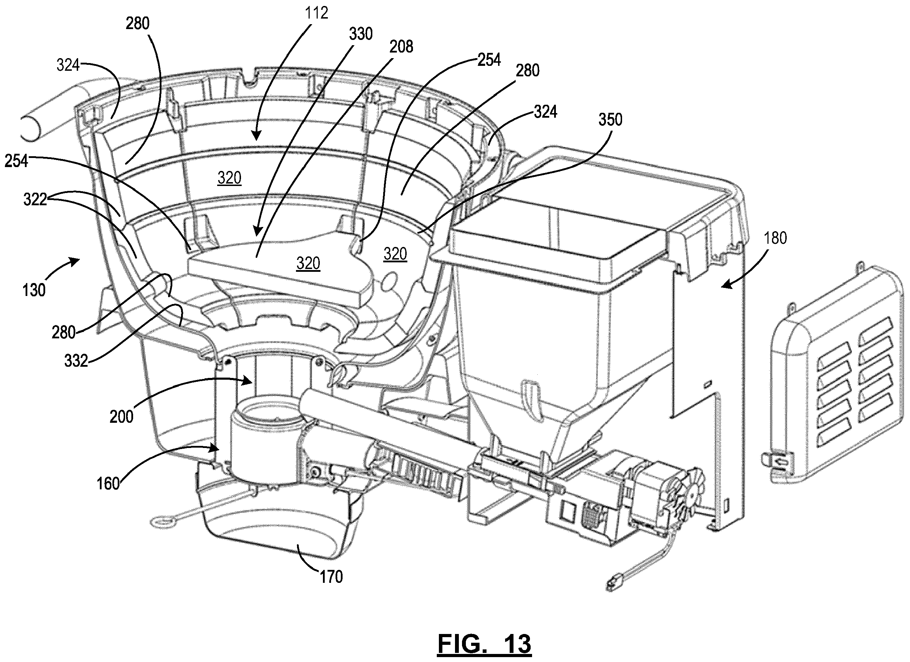

As exemplified in Figure 13, the cooking apparatus 100 includes a self-cleaning surface 320 on the floor of the cooking chamber 112 and a self-cleaning surface 320 on the central plate 208.

Each self-cleaning surface 320 is configured to heat up during a cooking operation such that grease falling on the self-cleaning surface 320 will vaporize. In some examples, the self-cleaning surface 320 is formed of a material that encourages grease vaporization in the cooking apparatus environment. For example, the self-cleaning surface material may be ceramic or other solid earthen material (e.g., at least 90% ceramic). In some examples, the self-cleaning surface material is metal (e.g., at least 90% metal), such as steel. The self-cleaning surfaces 320 may be the surfaces of plates formed of the floor material (e.g., ceramic or steel), such as floor plates 322 and/or a baffle plate 208.

The exemplary self-cleaning surfaces 320 are arranged such that the there is no straight vertical path (i.e., a path that food particles will fall through under gravity) from the cooking grid 140 to the combustion aperture 202 in the floor of the cooking chamber 112. Grease falling from the cooking grid 140 must run over the central plate 208 and/or floor 280 prior to reaching the combustion aperture 202. This may reduce flare-ups. The floor 280 may extend all the way to the combustion aperture 202 such that the floor 280 opens into the combustion aperture 202 directly. As exemplified, the floor 280 surrounds the combustion aperture 202. However, it will be understood that in other examples other positions of the combustion aperture may be used.

The exemplary self-cleaning surfaces 320 are arranged such that grease falling form any part of the cooking grid 140 falls on the self-cleaning surface 320. The exemplary cooking chamber 112 includes generally vertical sidewalls 324, and the floor 280 extends between the generally vertical sidewalls 324 such that the floor encloses the entire lower end of the cooking chamber 112 save for the combustion aperture 202. The combustion aperture 202 is shielded from falling grease by the central plate 208. In other words, the floor 280 covers the lower end of the cooking chamber 112 completely from the sidewalls 324 to the combustion aperture 202 without any additional apertures past the floor aside from the combustion aperture 202. This may reduce grease accumulation. As exemplified, the floor 280 and/or the self-cleaning surfaces 320 cover about all of the interior surface of the cooking chamber base 130 (e.g., at least 80%, at least 90%, or at least 95%).

It will be understood that while the self-cleaning surfaces 320 are configured to vaporize grease, some grease may still remain on the self-cleaning surface 320. For example, if a large amount of grease falls, it may take an extended period of combustion in the combustion chamber to heat up and/or maintain the heat of the self-cleaning surfaces 320 such that the grease is vaporized. If a large amount of grease falls, some grease may run off into the combustion aperture before it can be vaporized. Accordingly, there may be some grease collection within the collection receptacle 270.

### Lift-Out Tiles

In accordance with this aspect, the self-cleaning surface 320 is formed of removeable tiles or removeable formed steel plates. For example, the floor 280 may be formed of removeable floor tiles and the central plate 208 may be formed of a removable baffle tile 330. This aspect may be used by itself or in combination with one or more of the other aspects set out herein. The cooking apparatus 100 may include any one or more of the features or aspects set out herein.

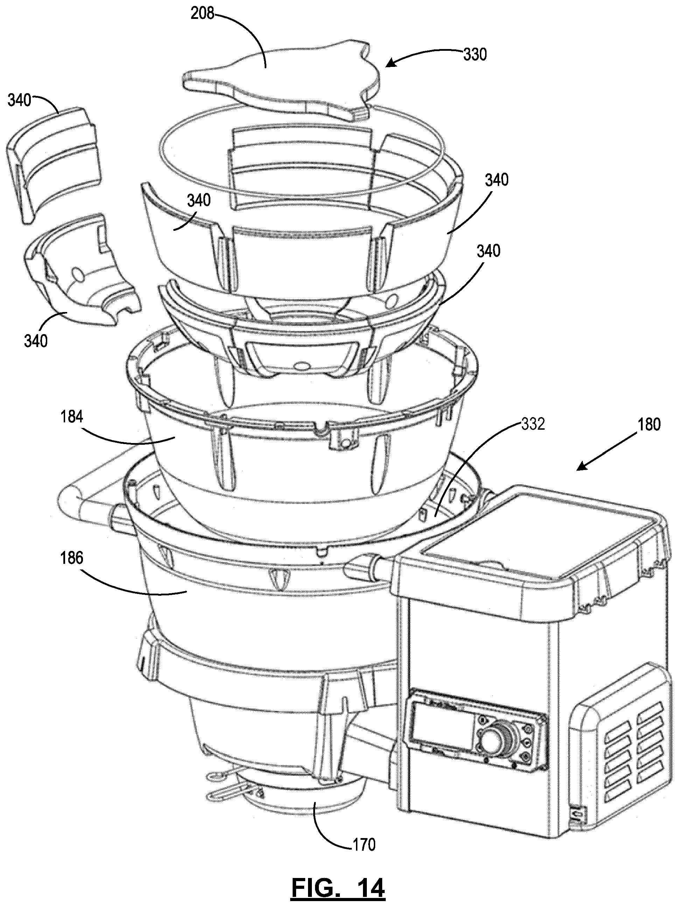

As exemplified in Figure 14, the floor 280 is formed of a plurality of floor tiles 340. The floor tiles 340 are shaped to abut one another when arranged in the cooking chamber 112 to cover a lower surface 332 of the cooking chamber 112 that extends between the generally vertical sidewalls 324. The floor tiles 340 rest loosely in the cooking chamber 112 (i.e., on lower surface 332) such that a user may lift the floor tiles out without releasing any fastener.

The central plate 208 is also a baffle tile 330. The baffle tile 330 rests on the shelf 254 (Figure 13) within the cooking chamber 112. The shelf 254 is formed in the floor tiles 340. The central plate 208 rests loosely in the cooking chamber 112 such that a user may lift the central baffle out without releasing any fastener.

It will be understood that in some examples, the removeable tiles may alternatively be removeable formed steel plates.

### Multi-Fuel Cooker

In accordance with this aspect, the cooking apparatus 100 may be configured to be heated by any one or combination of a plurality of fuel types. For example, the cooking apparatus 100 may be configured to be heated by pellets, charcoal, gas, or a combination of two or more of these fuels. Where the cooking apparatus 100 is configured to be heated by two or more fuels, the cooking apparatus 100 may be configured such that the user may select between them or the cooking apparatus 100 may be configured such that the user used both or all three at the same time. This aspect may be used by itself or in combination with one or more of the other aspects set out herein. The cooking apparatus 100 may include any one or more of the features or aspects set out herein.

As exemplified in Figure 13, the cooking apparatus 100 includes a shelf 350 on which a charcoal grid may rest (see also charcoal grid 352' on shelf 350' in Figure 5). The charcoal grid may be arranged above the combustion chamber 160. The charcoal grid may be used to hold charcoal to be used as fuel in heating the cooking chamber 112 instead of pellets consumed in the combustion chamber 160 or in addition to pellets consumed in the combustion chamber 160.

In some examples, pellet combustion in the combustion chamber 160 may be used to ignite charcoal on a charcoal gird that is supported on the shelf 350. For example, the user may add pellets to the combustion chamber 160, light the pellets using the pellet igniter 210, and allow the pellet fire to ignite the charcoal above the pellet fire. The central plate 208 may be removed to allow flames to reach the charcoal from the pellet fire.

In some examples, the air moving member 236 may be used to control charcoal combustion. The air moving member 236 may be used whether or not pellets are being fed to the combustion chamber 160 and/or whether or not pellets are being consumed in the combustion chamber. In other words, the air moving member 236 may be controlled independently from the auger 232 and/or the pellet igniter 210.

In some examples, the cooking apparatus 100 is configured to be heated using liquid fuel. The cooking apparatus 100 may include a gas burner at the cooking chamber lower end 134. The gas burner may be included instead of the combustion chamber 160 or may be included in the combustion chamber 160. The cooking apparatus 100 may be configured to be heated using liquid fuel instead of or in addition to using pellet fuel. The cooking apparatus 100 may be configured to be heated using liquid fuel instead of or in addition to using charcoal. In some examples, the cooking apparatus 100 is configured to be heated using liquid fuel, pellet fuel, and charcoal, such that a user can choose which combination to utilize.

It is to be understood that in some examples the cooking apparatus 100 is configured to be used with only one type of fuel (i.e., no gas burner and/or charcoal grid shelf is included).

The present invention has been described here by way of example only. Various modification and variations may be made to these exemplary embodiments without departing from the scope of the invention, which is limited only by the appended claims.

## Claims

1. A cooking apparatus, comprising:
a) a body defining an interior cooking chamber for cooking food;
b) a combustion chamber coupled to the body, the combustion chamber including a combustion zone with a fuel supply port opening directly into the combustion zone, the combustion zone arranged to heat the cooking chamber;
c) a fuel supply assembly coupled to the body, the fuel supply assembly including a fuel supply reservoir arranged to provide fuel to the fuel supply port;
d) an air supply assembly coupled to the body, the air supply assembly including an air moving member arranged to move air towards an air supply port opening into the combustion chamber; and
e) a baffle separating the combustion zone from the air supply port.

2. The cooking apparatus of claim 1, wherein:
a) the baffle is within the combustion chamber separating the combustion zone from an air supply zone, the air supply port opening into the air supply zone; and/or
b) the baffle is positioned such that the combustion zone is laterally encircled by a first set of walls, the first set of walls including a planar portion of the baffle and a curved combustion chamber wall portion; and/or
c) the combustion chamber has a generally vertical longitudinal axis, and the combustion zone has a first area in a first plane tangential to the longitudinal axis and a second area in a second plane tangential to the longitudinal axis, the second plane below the first plane, and the first area is greater than the second area.

3. The cooking apparatus of any one of claims 1 or 2, wherein the baffle is removeable, optionally wherein the baffle is resting loosely in the combustion chamber or wherein the baffle is secured to a removeable combustion chamber wall portion forming at least a part of the air supply opening.

4. The cooking apparatus of any one of claims 1 to 3, wherein the combustion chamber is laterally encircled by a cylindrical pot, the cylindrical pot including the curved combustion chamber wall portion.

5. The cooking apparatus of any one of claims 1 to 3, wherein the combustion chamber is laterally encircled by a second set of walls, the second set of walls including the curved combustion chamber wall portion and a flared duct portion.

6. The cooking apparatus of claim 5, wherein the flared duct portion is the removeable combustion chamber wall portion.

7. The cooking apparatus of any one of claims 1 to 6, wherein the combustion chamber is a pellet burner pot, the fuel supply assembly is a pellet supply assembly and the fuel supply reservoir is a pellet hopper, optionally wherein the fuel supply assembly includes an auger assembly, and the auger assembly includes a screw within a tube as a fuel supply conduit between the fuel supply reservoir and the fuel supply port, and the screw has a screw diameter that is less than 90% of a tube inner diameter of the tube, optionally wherein the auger assembly further includes a motor assembly, and wherein the auger assembly is removeable from the cooking apparatus without the use of tools, optionally wherein the screw and the motor assembly are removable from the auger assembly without the use of tools, optionally wherein the pellet burner pot is removeable from the cooking apparatus without the use of tools.

8. The cooking apparatus of any one of claims 1 to 7, wherein:
a) the air supply assembly is removeable from the cooking apparatus without the use of tools; and/or
b) a portion of the air supply assembly includes a pellet igniter, and the portion of the air supply assembly is removeable from the cooking apparatus without the use of tools; and/or
c) the air moving member is a fan, and the fan is a low cfm fan; and/or
d) the body is an insulated body; and/or
e) the insulated body includes a double walled construction; and/or
f) the body is a Kamado-style body, a Kettle-style body, or a rectangular-style body.

9. The cooking apparatus of any one of claims 1 to 8, further comprising:
a) an openable collection receptacle below the combustion chamber, wherein the combustion chamber includes a chamber ash aperture in a bottom of the combustion chamber leading to the collection receptacle, and
b) an ash-shaker coupled to the body, the ash-shaker including a moveable member within the combustion chamber and an actuator outside the combustion chamber, the actuator connected to the moveable member to move the moveable member within the combustion chamber to encourage debris in the combustion chamber to fall through the chamber ash aperture and into the collection receptacle.

10. The cooking apparatus of claim 9, wherein:
a) the actuator is a handle drivingly connected to the movable member; and/or.
b) the moving member is a plate with a plate ash aperture such that the actuator can be moved to move the plate to allow the plate ash aperture to cooperate with the chamber ash aperture such that the unburned debris falls out of the combustion chamber and into the collection receptacle

11. The cooking apparatus of any one of claims 1 to 10, wherein the combustion chamber is suspended in a combustion plenum, optionally wherein:
a) the combustion plenum is below the interior cooking chamber and is open to the interior cooking chamber at an upper end of the combustion plenum via a combustion aperture; and further optionally wherein:
b) the combustion chamber is spaced from sidewalls of the combustion plenum such that a majority of a perimeter of the combustion aperture is above an open portion of the combustion plenum that is not occupied by the combustion chamber; and further optionally wherein:
c) a floor of the interior cooking chamber opening into the combustion plenum is formed of a floor material that is at least 90% steel, at least 90% aluminum, at least 90% ceramic, or at least 90% of a combination of steel, aluminum, and/or ceramic, optionally wherein the floor is formed of the floor material surrounds the combustion aperture;
further optionally comprising
d) a central baffle plate over the combustion aperture, the central baffle plate formed of a central baffle plate material that is at least 90% ceramic;
and further optionally wherein
e) an openable collection receptacle is below the combustion plenum and arranged to collect debris falling through the combustion plenum from the floor of the interior cooking chamber and the combustion chamber.

12. An insulated pellet cooking apparatus, comprising:
a) a body defining an interior cooking chamber for cooking food;
b) a combustion chamber below the interior cooking chamber and open to the interior cooking chamber at an upper end of the combustion chamber via a combustion aperture in a lower end of the interior cooking chamber, and
c) a floor of the interior cooking chamber covering all of the lower end of the interior cooking chamber, the floor surrounding the combustion aperture and opening into the combustion aperture, the floor formed of a floor material that is at least 90% steel, at least 90% aluminum, at least 90% ceramic, or at least 90% of a combination of steel, aluminum, and/or ceramic.

13. The insulated pellet cooking apparatus of claim 12, wherein the floor is formed of removeable tiles, optionally wherein the removeable tiles are resting loosely in the internal cooking chamber, optionally further:
a) comprising a central baffle plate over the combustion aperture, the central baffle plate formed of a central baffle plate material that is at least 90% ceramic or 90% steel; and/or
b) comprising a combustion plenum below the interior cooking chamber and open to the interior cooking chamber at an upper end of the combustion plenum via the combustion aperture, and wherein the combustion chamber is suspended in the combustion plenum, the combustion chamber spaced from sidewalls of the combustion plenum such that a majority of a perimeter of the combustion aperture is above an open portion of the combustion plenum that is not occupied by the combustion chamber; and/or
c) wherein the combustion chamber is a pellet burner pot, and the cooking apparatus further comprises a pellet supply assembly including a pellet hopper and an auger operable to carry pellets from the pellet hopper to the pellet burner pot; and/or
d) comprising an openable collection receptacle below the combustion plenum and arranged to collect debris falling through the combustion plenum from the interior cooking chamber and the combustion chamber; and/or
e) wherein the body is an insulated body; and/or
f) wherein the insulated body includes a double walled construction; and/or
g) wherein the body is a Kamado-style body, a Kettle-style body, or a rectangular-style body; and/or
h) wherein the body includes a lid and a base together forming the cooking chamber, and the floor covers about all of an interior surface of the base.

14. A cooking apparatus, comprising:
a) a body defining an interior cooking chamber for cooking food;
b) a combustion plenum below the interior cooking chamber and open to the interior cooking chamber at an upper end of the combustion plenum via a combustion aperture;
c) a combustion chamber suspended in the combustion plenum, the combustion chamber spaced from sidewalls of the combustion plenum such that a majority of a perimeter of the combustion aperture is above an open portion of the combustion plenum that is not occupied by the combustion chamber;
d) a floor of the interior cooking chamber opening into the combustion plenum; and
e) an openable collection receptacle below the combustion plenum and arranged to collect debris falling through the combustion plenum from the interior cooking chamber and the combustion chamber.

15. The cooking apparatus of claim 14, wherein
a) the floor is formed of a floor material that is at least 90% steel, at least 90% aluminum, at least 90% ceramic, or at least 90% of a combination of steel, aluminum, and/or ceramic; and/or
b) the floor that is formed of the floor material surrounds the combustion aperture; and/or
c) the internal cooking chamber includes generally vertical sidewalls with a lower surface between the generally vertical sidewalls, and the floor that is formed of the floor material covers all of the lower surface of the internal cooking chamber between the generally vertical sidewalls.
